(19) Europäisches Patentamt
European Patent Office
Office européen des brevets

(11) **EP 3 174 184 A1**

(12) **EUROPÄISCHE PATENTANMELDUNG**

(43) Veröffentlichungstag:
**31.05.2017 Patentblatt 2017/22**

(51) Int Cl.:
***H02K 49/00*** *(2006.01)*  ***H02K 49/10*** *(2006.01)*
***H02K 49/04*** *(2006.01)*

(21) Anmeldenummer: **16199154.2**

(22) Anmeldetag: **16.11.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **25.11.2015 DE 102015223344**

(71) Anmelder: **Mahle International GmbH**
**70376 Stuttgart (DE)**

(72) Erfinder:
• **MÜLLER, Rolf**
**71711 Steinheim/Murr (DE)**
• **RIEMAY, Thomas**
**71404 Korb (DE)**
• **WIESKE, Peter**
**70825 Korntal-Münchingen (DE)**

(74) Vertreter: **BRP Renaud & Partner mbB**
**Rechtsanwälte Patentanwälte**
**Steuerberater**
**Königstraße 28**
**70173 Stuttgart (DE)**

(54) **MAGNETISCHE KUPPLUNG, INSBESONDERE FÜR EINE ABWÄRMENUTZUNGSEINRICHTUNG**

(57)     Die Erfindung betrifft eine magnetische Kupplung (1), insbesondere für eine Abwärmenutzungseinrichtung,
- mit einem ersten Rotor (5) und einem zweiten Rotor (6), welche um eine gemeinsame, sich entlang einer axialen Richtung (A) der beiden Rotoren (2, 3) erstreckende Drehachse (D) drehverstellbar sind, derart, dass der erste Rotor (6) in der axialen Richtung (A) magnetisch mit dem zweiten Rotor (6) gekoppelt ist,
- wobei an wenigstens einem der beiden Rotoren (5, 6) an einer dem jeweils anderen Rotor (6, 5) zugewandten axialen Stirnseite (7, 14) ein stirnseitiges Begrenzungsteil (4) aus einem elektrisch leitenden Material zum Reduzieren einer Drehzahl-Differenz zwischen den beiden Rotoren (5, 6) angeordnet ist.

Fig. 1

**Beschreibung**

Die Erfindung betrifft eine magnetische Kupplung, insbesondere für eine Abwärmenutzungseinrichtung.

Beim Betrieb einer Brennkraftmaschine fallen typischerweise große Abwärme-Mengen an. Es ist grundsätzlich möglich und erstrebenswert, diese Abwärme-Mengen mit entsprechenden thermodynamischen Prozessen in mechanische Arbeit umzuwandeln bzw. in einer für mechanische Arbeit geeigneten Weise zu speichern. Etwa besteht die prinzipielle Möglichkeit, mittels der Abwärme eines Abgassystems ein Fluid, wie zum Beispiel Ethanol, Kältemittel oder Wasser-Ammoniak zu verdampfen und den so erzeugten Dampf zum Betrieb einer Turbine oder einer sonstigen Expansions- oder Strömungsmaschine zu nutzen. Dabei sollte das Turbinenrad der Turbine in einem fluidisch hermetisch isolierten Bereich arbeiten, um das zum Betrieb verwendete Fluid nachfolgend ohne Schwund erneut erhitzen und zum Antreiben des Turbinenrads heranziehen zu können. Auch aus Sicherheitsgründen kann eine hermetische Abdichtung erforderlich sein, etwa um einen Austritt von Ethanol und eine damit verbundene Entzündung des Ethanols zu vermeiden.

In diesem Zusammenhang besteht das Problem, das Turbinenrad antriebsmäßig mit einer die Arbeit der Turbine oder dergleichen nutzenden Einrichtung zu verbinden.

Aus dem Stand der Technik ist es bekannt, magnetische Kupplungen zu verwenden, mittels welcher das vom Turbinenrad in einem fluidisch isolierten Bereich erzeugte Drehmoment kontaktlos aus dem isolierten Bereich heraus übertragen werden kann. Hierzu ist es bekannt, das Turbinenrad der Turbine drehfest mit einem antriebsseitigen, ersten Rotor zu verbinden, welcher im fluidisch isolierten Bereich angeordnet ist. Ein abtriebsseitiger, zweiter Rotor ist hingegen außerhalb des isolierten Bereichs angeordnet. Die Drehmoment-Übertragung zwischen den beiden Rotoren erfolgt durch magnetische Kopplung der an den beiden Rotoren vorgesehenen magnetischen Elemente.

Ist nun der abtriebsseitige der beiden Rotoren mit einer Last gekoppelt, so kann das Szenario eintreten, dass der abtriebsseitige Rotor einer Erhöhung der Drehgeschwindigkeit des antriebsseitigen Rotors nicht mehr zu folgen vermag. Ein solcher Effekt ist dem einschlägigen Fachmann als "Durchrutschen" der Kupplung bekannt. Mit einem solchen "Durchrutschen" der Kupplung ist jedoch eine unerwünschte Drehzahl-Differenz der beiden Rotoren verbunden, die im Extremfall zu einer unkontrollierten Drehbewegung des abtriebsseitigen Rotors führt.

Es ist daher eine Aufgabe der vorliegenden Erfindung, eine verbesserte Ausführungsform einer magnetischen Kupplung zu schaffen, bei welcher insbesondere ein unerwünschtes "Durchrutschen" der Kupplung weitgehend oder sogar vollständig ausgeschlossen werden kann.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, an wenigstens einem der beiden Rotoren an einer dem jeweils anderen Rotor zugewandten axialen Stirnseite ein stirnseitiges Begrenzungsteil aus einem elektrisch leitenden Material vorzusehen. In diesem Begrenzungsteil werden elektrische Kreisströme induziert, wenn sich im Betrieb der beiden Rotoren eine Drehzahl-Differenz zwischen den beiden Rotoren aufbaut. Durch die mit solchen elektrischen Induktionsströmen einhergehenden Magnetfelder kann ein zusätzliches, auf den abtriebsseitigen Rotor wirkendes Drehmoment erzeugt werden, welches besagter Drehzahl-Differenz entgegen wirkt. Das heißt, mittels des zusätzlichen Drehmoments wird der abtriebsseitige Rotor beschleunigt oder entschleunigt, also abgebremst, und zwar derart, dass sich die Drehzahl-Differenz zwischen den beiden Rotoren wieder verringert, bis sie im Idealfall vollständig aufgehoben ist. Das eingangs erläuterte Durchrutschen der magnetischen Kupplung kann auf diese Weise weitgehend oder sogar vollständig ausgeschlossen werden.

Eine erfindungsgemäße magnetische Kupplung, insbesondere für eine Abwärmenutzungseinrichtung, umfasst einen ersten Rotor und einen zweiten Rotor, welche beide um eine gemeinsame, sich entlang einer axialen Richtung der beiden Rotoren erstreckende Drehachse drehbar sind. Die Anordnung der beiden Rotoren relativ zueinander ist dabei derart realisiert, dass der erste Rotor in der axialen Richtung magnetisch mit dem zweiten Rotor gekoppelt ist. Erfindungsgemäß ist an wenigstens einem der beiden Rotoren an einer dem jeweils anderen Rotor zugewandten axialen Stirnseite ein stirnseitiges Begrenzungsteil aus einem elektrisch leitenden Material angeordnet. Besagtes Begrenzungsteil dient zum Reduzieren, vorzugsweise zum Beseitigen, einer etwaig vorhandenen Drehzahl-Differenz zwischen den beiden Rotoren.

Bei einer bevorzugten Ausführungsform ist das stirnseitige Begrenzungsteil als, insbesondere zylindrische, stirnseitige Begrenzungsscheibe ausgebildet. Eine solche Realisierung des Begrenzungsteils in Scheibenform hat einen besonders geringen Bedarf an Bauraum, insbesondere in der axialen Richtung, zur Folge.

Eine besonders schnelle Anpassung der Drehzahl der beiden Rotoren aneinander lässt sich bei einer vorteilhaften Weiterbildung der magnetischen Kupplung erreichen, bei welcher sowohl am ersten Rotor als auch am zweiten Rotor jeweils ein stirnseitiges Begrenzungsteil angeordnet ist.

Besonders hohe elektrische Induktionsströme lassen sich erzeugen, wenn das Material des stirnseitigen Begrenzungsteils keine ferromagnetischen Eigenschaften besitzt.

Besonders zweckmäßig umfasst das Material des stirnseitigen Begrenzungsteils Kupfer. Alternativ dazu kann das Begrenzungsteil ausschließlich aus Kupfer hergestellt sein, also aus Kupfer bestehen. Die Verwendung von Kupfer führt zu elektrischen Induktionsströmen im Begrenzungsteil, die ein Magnetfeld erzeugen, welches ein besonders starkes Drehmoment zur Reduzierung der Drehzahl-Differenz in dem Rotor erzeugt. In einer Variante kann anstelle von Kupfer auch ein anderes Metall verwendet werden.

In einer vorteilhaften Weiterbildung der Erfindung besitzt der erste Rotor wenigstens einen erstes Magnetelement. Der zweite Rotor besitzt wenigstens ein zweites Magnetelement. Die ersten und zweiten Magnetelemente sind dabei an einander zugewandten axialen Stirnseiten der beiden Rotoren angeordnet. Auf diese Weise können die beiden Rotoren hochwirksam magnetisch miteinander gekoppelt werden.

In einer weiteren bevorzugten Ausführungsform umfasst die magnetische Kupplung wenigstens zwei erste Magnetelemente, vorzugsweise eine Mehrzahl von ersten Magnetelementen. Diese sind entlang der Umfangsrichtung des ersten Rotors benachbart zueinander angeordnet. Alternativ oder zusätzlich kann die magnetische Kupplung wenigstens zwei zweite Magnetelemente, vorzugsweise eine Mehrzahl von zweiten Magnetelementen, umfassen, welche dann ebenfalls entlang der Umfangsrichtung des zweiten Rotors benachbart zueinander angeordnet sind. Die Anzahl der ersten und zweiten Magnetelemente kann auf diese Weise anwendungsspezifisch festgelegt werden, was sich insbesondere als vorteilhaft erweist, wenn die magnetische Kupplung als magnetisches Getriebe realisiert werden soll.

Besonders zweckmäßig kann das wenigstens eine erste Magnetelement und/oder das wenigstens eine zweite Magnetelement als Permanentmagnet ausgebildet sein, das eine magnetische Polarisationsrichtung entlang der axialen Richtung aufweist. Derart ausgebildete Magnetelemente sind kommerziell kostengünstig und in großen Mengen verfügbar, was sich vorteilhaft auf die Fertigungskosten der magnetischen Kupplung auswirkt.

In einer weiteren bevorzugten Ausführungsform kann der erste Rotor ein erstes Basisteil aufweisen. An diesem Basisteil ist an einer dem zweiten Rotor zugewandten Stirnseite eine erste Aufnahme vorhanden, in welcher das wenigstens eine erste Magnetelement aufgenommen ist. Eine solche Aufnahme erleichtert die Montage des ersten Magnetelements. Dies gilt insbesondere, wenn eine Mehrzahl von ersten Magnetelementen vorhanden ist. In analoger Weise kann daher alternativ oder zusätzlich zum ersten Rotor auch der zweite Rotor ein zweites Basisteil aufweisen, an welchem an einer dem ersten Rotor zugewandten Stirnseite eine zweite Aufnahme vorhanden ist. In dieser zweiten Aufnahme ist das wenigstens eine zweite Magnetelement aufgenommen.

Besonders bevorzugt verschließt das stirnseitige Begrenzungsteil, insbesondere die stirnseitige Begrenzungsscheibe, die erste bzw. zweite Aufnahme, vorzugsweise deckelartig. Diese Maßnahme erlaubt eine besonders einfache Montage des Begrenzungsteils am Rotor.

Besonders bevorzugt erstreckt sich das Begrenzungsteil im Wesentlichen über die Stirnseite des Rotors hinweg. Auf diese Weise kann durch das elektrische Magnetfeld, welches durch die im Begrenzungsteil induzierten elektrischen Induktionsströme erzeugt wird, besonders effektiv mit dem jeweils anderen Rotor gekoppelt werden.

Zur stabilen Aufnahme der Magnetelemente in der ersten Aufnahme erweist es sich als vorteilhaft, wenn die erste Aufnahme als ein axial vom ersten Basisteil zum zweiten Rotor hin abstehender erster Aufnahme-Kragen ausgebildet ist. In diesen ersten Aufnahme-Kragen ist das wenigstens eine erste Magnetelement eingesetzt. Alternativ oder zusätzlich kann auch die zweite Aufnahme als ein axial vom zweiten Basisteil zum ersten Rotor hin abstehender zweiter AufnahmeKragen ausgebildet sein. In die zweite Aufnahme ist das wenigstens eine zweite Magnetelement eingesetzt.

Zur verbesserten Aussteifung der ersten Aufnahme wird in einer weiteren bevorzugten Ausführungsform vorgeschlagen, auf dem ersten Aufnahme-Kragen radial außen ein den ersten Aufnahme-Kragen entlang der Umfangsrichtung einfassendes, erstes äußeres Hülsenelement anzuordnen. Als Hülsenmaterial des ersten äußeren Hülsenelements empfiehlt sich dabei ein Faserverbundwerkstoff, insbesondere Carbon, der sich durch ein geringes Eigengewicht bei gleichzeitig extrem hoher mechanischer Festigkeit auszeichnet. Alternativ oder zusätzlich kann zur verbesserten Aussteifung der zweiten Aufnahme auch auf dem zweiten Aufnahme-Kragen radial außen ein den zweiten Aufnahme-Kragen entlang der Umfangsrichtung einfassendes, zweites äußeres Hülsenelement angeordnet sein. Auch für das Hülsenmaterial des zweiten äußeren Hülsenelements empfiehlt sich einen Faserverbundwerkstoff, insbesondere das bereits genannte Carbon.

Eine verbesserte Aussteifung der ersten Aufnahme kann auch gemäß einer weiteren bevorzugten Ausführungsform erreicht werden, bei der am ersten AufnahmeKragen radial innen ein sich entlang der Umfangsrichtung erstreckendes und an den ersten Magnetelementen anliegendes, erstes inneres Hülsenelement angeordnet ist. Auch das Hülsenmaterial des ersten inneren Hülsenelements kann einen Faserverbundwerkstoff, insbesondere Carbon, umfassen. Alternativ oder zusätzlich kann auch zur verbesserten Aussteifung der zweiten Aufnahme am zweiten Aufnahme-Kragen ein sich entlang der Umfangsrichtung erstreckendes und an den zweiten Magnetelementen radial innen anliegendes zweites inneres Hülsenelement angeordnet sein, dessen Hülsenmaterial einen Faserverbundwerkstoff, insbesondere Carbon, umfasst.

Bei einer vorteilhaften Weiterbildung ist das stirnseitige Begrenzungsteil in das erste bzw. zweite Hülsenelement eingesetzt. Bei dieser Variante schließt eine in der axialen Richtung dem jeweils anderen Rotor zugewandte Stirnseite des Begrenzungsteils in axialer Richtung vom Rotor weg bündig mit einer dem besagten Rotor zugewandten Stirnseite des Hülsenelements ab.

Besonders zweckmäßig liegt das stirnseitige Begrenzungsteil axial an dem jeweiligen Aufnahme-Kragen an. Mit dieser Maßnahme geht eine besonders stabile Fixierung des Begrenzungsteils am Rotor einher.

Zweckmäßig kann das stirnseitige Begrenzungsteil mit dem jeweiligen Aufnahmekragen und/oder dem jeweiligen Hülsenelement verklebt sein. Dies gewährleistet eine dauerhaft stabile Fixierung des Begrenzungsteils am Rotor.

Besonders bevorzugt ist der erste Rotor relativ zum zweiten Rotor in der axialen Richtung verstellbar ausgebildet oder umgekehrt. Auf diese Weise kann die Stärke der magnetischen Wechselwirkung zwischen den beiden Rotoren anwendungsspezifisch variiert und eingestellt werden.

Aus anwendungsspezifischen Gründen kann es im Praxisbetrieb der magnetischen Kupplung von Vorteil sein, wenn die Drehzahl des Turbinenrads ins Langsame übersetzt wird. Hierfür wird vorgeschlagen, die magnetische Kupplung als Magnetgetriebe, insbesondere in der Art eines Reluktanzgetriebes, auszubilden.

Soll die magnetische Kupplung die Wirkung eines magnetischen Getriebes entfalten, so wird bei einer vorteilhaften Weiterbildung der Erfindung vorgeschlagen, an der Trennwand entlang der Umfangsrichtung eine Mehrzahl von Polstäben anzuordnen. Diese Polstäbe bewirken, wenn sie zusammen mit den ersten und zweiten Magnetelementen in geeigneter Anzahl bereitgestellt sind, die gewünschte Übersetzung der Drehzahl des Turbinenrads ins Langsame.

Um den ersten Rotor, insbesondere bei Verwendung in einer Abwärmenutzungseinrichtung, fluidisch vom zweiten Rotor der magnetische Kupplung zu isolieren, wird besonders zweckmäßig vorgeschlagen, in der axialen Richtung zwischen dem ersten und dem zweiten Rotor eine Trennwand vorzusehen. Eine solche Trennwand mag etwa in einem axial zwischen den beiden Rotoren angeordneten Zwischenraum ausgebildet sein, welcher bevorzugt in der Art eines Spalts realisiert ist.

Es zeigen, jeweils schematisch

Fig. 1      ein Beispiel einer erfindungsgemäßen magnetischen Kupplung in einem Längsschnitt entlang der gemeinsamen Drehachse ihrer beiden Rotoren,

Fig. 2      den ersten Rotor der magnetischen Kupplung in einer stirnseitigen Draufsicht,

Fig. 3      den zweiten Rotor der magnetischen Kupplung in einer perspektivischen Darstellung,

Fig. 4-7    eine Variante der magnetischen Kupplung der Figur 1, bei welcher die magnetische Kupplung als magnetisches Getriebe ausgebildet ist,

Fig. 8      eine Variante der ersten und zweiten Magnetelemente der magnetischen Kupplung,

Fig. 9      eine weiterbildende Variante des ersten Rotors der Figuren 1 bis 7.

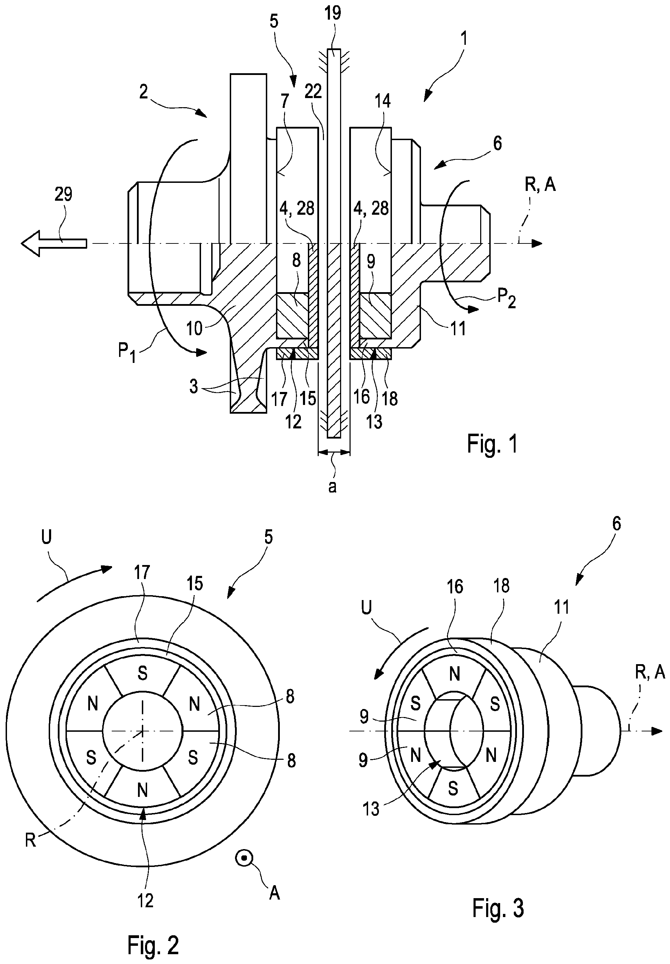

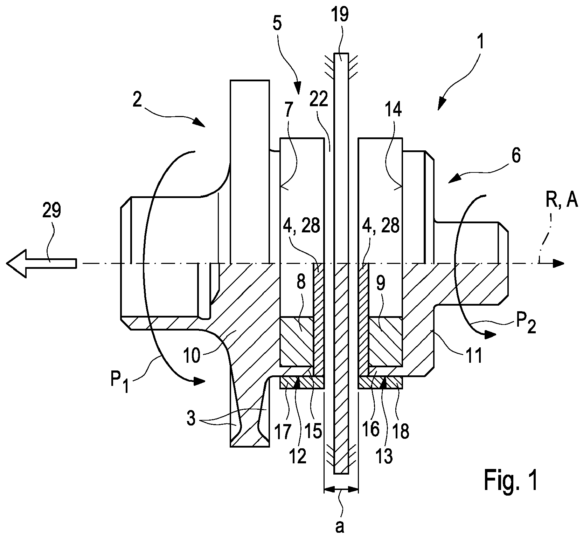

Figur 1 zeigt ein Beispiel einer erfindungsgemäßen magnetischen Kupplung 1. Die magnetische Kupplung 1 weist einen ersten Rotor 5 und einen zweiten Rotor 6 auf, die jeweils unabhängig voneinander um eine gemeinsame, eine axiale Richtung A definierende Drehachse R drehverstellbar sind. Die Drehverstellbarkeit der Rotoren 5, 6 ist in Figur 1 durch die Pfeile $P_1$, $P_2$ angedeutet. Der erste Rotor 5 ist im Beispiel der Figuren drehfest mit einem Turbinenrad 2 verbunden, welches mehrere Laufschaufeln 3 aufweist. Der erste Rotor 5 ist in der axialen Richtung A magnetisch mit dem zweiten Rotor 6 gekoppelt. Entsprechend Figur 1 besitzt der erste Rotor 5 hierzu eine Mehrzahl von ersten Magnetelementen 8, die entlang der Umfangsrichtung U des ersten Rotors 5 benachbart zueinander angeordnet sind.

Dieses Szenario illustriert die Darstellung der Figur 2, welche den ersten Rotor 5 in Draufsicht entlang der axialen Richtung A auf eine dem zweiten Rotor 6 zugewandte Stirnseite 7 zeigt. In analoger Weise besitzt der zweite Rotor 6 eine Mehrzahl von zweiten Magnetelementen 9 - in Figur 3 in perspektivischer Darstellung gezeigt -, die entlang der Umfangsrichtung U des zweiten Rotors 6 benachbart zueinander angeordnet sind. Im Beispiel der Figuren ist der erste Rotor 5 mit den ersten Magnetelementen 8 integral am Turbinenrad 2 ausgeformt. Alternativ dazu kann der erste Rotor 5 auch als separates Bauteil ausgebildet sein, welches, insbesondere mittels einer Schraubverbindung, mittels Einpressen oder mittels eines Befestigungsbolzens lösbar am Turbinenrad 2 befestigbar ist. Dies erweist sich insbesondere als vorteilhaft, wenn der erste und zweite Rotor 5, 6 als Gleichteile ausgebildet sind.

Die ersten Magnetelemente 8 und die zweiten Magnetelemente 9 sind jeweils als Permanentmagnete ausgebildet, die eine magnetische Polarisationsrichtung entlang der axialen Richtung aufweisen. Entsprechend den Figuren 2 und 3 besitzen zwei in Umfangsrichtung U erste bzw. zweite Magnetelemente 8, 9 jeweils eine entgegengesetzte Polarisation, d.h. in der Draufsicht der Figur 2 wechseln sich in Umfangsrichtung U ein Nordpol N und ein Südpol ab. Gleiches gilt für die zweiten Magnetelemente 9 des zweiten Rotors 6 (vgl. hierzu Figur 3).

Betrachtet man nun wieder die Figur 1, so erkennt man, dass der erste Rotor 5 ein erstes Basisteil 10 aufweist, welches vorzugsweise integral am Turbinenrad 2 ausgeformt ist. Am ersten Basisteil 10 ist an der dem zweiten Rotor 6 zugewandten Stirnseite 7 eine erste Aufnahme 12 vorhanden, in welcher die ersten Magnetelemente 8 aufgenommen sind. Entsprechend weist der zweite Rotor 9 ein zweites Basisteil 11 auf, an welchem an einer dem ersten Rotor 6 zugewandten Stirnseite 14 eine zweite Aufnahme 13 vorhanden ist. In der zweiten Aufnahme 13 sind die zweiten Magnetelemente 9 aufgenommen.

Wie die Figuren 1 bis 3 anschaulich belegen, ist die erste Aufnahme 12 als ein axial vom ersten Basisteil 10 zum zweiten Rotor 6 hin abstehender erster Aufnahme-Kragen 15 ausgebildet. In den ersten Aufnahme-Kragen 15 sind die ersten Magnetelement 8 eingesetzt (vgl. hierzu Fig. 2). Auch die zweite Aufnahme 13 (vgl. hierzu Fig. 3) ist als ein axial vom zweiten Basisteil 11 zum ersten Rotor 5 hin abstehender zweiter Aufnahme-Kragen 16 ausgebildet. In den zweiten Aufnahme-Kragen 16 sind daher in analoger Weise zum ersten Aufnahme-Kragen 15 die zweiten Magnetelemente 9 eingesetzt.

Wie Figur 1 erkennen lässt, ist am ersten Rotor 5 an einer dem zweiten Rotor 6 zugewandten Stirnseite 7 ein stirnseitiges Begrenzungsteil 4 aus einem elektrisch leitenden Material angeordnet. Das Begrenzungsteil 4 ist als Begrenzungsscheibe 28 ausgebildet, die eine runde, vorzugsweise eine kreisrunde, Geometrie besitzt.

Die Begrenzungsscheibe 28 bzw. das stirnseitige Begrenzungsteil 4 dienen zum Reduzieren einer Drehzahl-Differenz zwischen dem ersten und dem zweiten Rotor 5, 6. Bevorzugt weist das Material des stirnseitigen Begrenzungsteils 4 keine ferromagnetischen Eigenschaften auf. Besonders bevorzugt besteht das stirnseitige Begrenzungsteil 4 aus Kupfer oder umfasst Kupfer.

In dem Begrenzungsteil 4 werden elektrische Kreisströme induziert, wenn sich im Betrieb der beiden Rotoren 5, 6 eine Drehzahl-Differenz zwischen den beiden Rotoren 5, 6 aufbaut. Durch die mit solchen elektrischen Induktionsströmen einhergehenden Magnetfelder kann ein zusätzliches, auf den abtriebsseitigen Rotor 6 - im Beispielszenario ist dies der zweite Rotor 6 - wirkendes Drehmoment erzeugt werden, welches besagter Drehzahl-Differenz entgegen wirkt. Das heißt, mittels des zusätzlichen Drehmoments wird der zweite Rotor 6 beschleunigt oder entschleunigt, also abgebremst, und zwar derart, dass sich die Drehzahl-Differenz zwischen den beiden Rotoren 5, 6 wieder verringert, bis sie im Idealfall vollständig aufgehoben ist. Ein oben erläutertes Durchrutschen der magnetischen Kupplung 1 kann auf diese Weise weitgehend oder sogar vollständig ausgeschlossen werden.

Bevorzugt erstreckt sich das Begrenzungsteil 4 im Wesentlichen über die Stirnseite des Rotors 5 hinweg. Auf diese Weise kann durch das elektrische Magnetfeld, welches durch die im Begrenzungsteil 4 induzierten elektrischen Induktionsströme erzeugt wird, besonders effektiv mit dem zweiten Rotor 6 gekoppelt werden.

Zusätzlich zu dem am ersten Rotor 5 vorgesehenen stirnseitigen Begrenzungsteil 4 ist auch am zweiten Rotor 6 an einer dem ersten Rotor 5 zugewandten Stirnseite 14 ein Begrenzungsteil 4 angeordnet. Das Begrenzungsteil 4 am zweiten Rotor 6 folgt demselben Wirkprinzip wie das Begrenzungsteil 4 am ersten Rotor 5. In einer vereinfachten Variante kann auf eines der beiden stirnseitigen Begrenzungsteile 4 verzichtet sein. Wie der Figur 1 entnommen werden kann, verschließen die beiden jeweils als zylindrische Begrenzungsscheiben 28 ausgebildeten Begrenzungsteile 4 die erste bzw. zweite Aufnahme 12, 13 jeweils in der Art eines Deckels.

Zur Aussteifung des Aufbaus ist auf dem ersten Aufnahme-Kragen 15 radial außen ein den ersten Aufnahme-Kragen 15 entlang der Umfangsrichtung U einfassendes, erstes äußeres Hülsenelement 17 angeordnet. Das Hülsenmaterial des ersten äußeren Hülsenelements 17 kann einen Faserverbundwerkstoff, insbesondere Carbon, umfassen oder aus einem solchen bestehen. Zur Aussteifung des Aufbaus ist auch auf dem zweiten Aufnahme-Kragen 16 radial außen ein den zweiten Aufnahme-Kragen 16 entlang der Umfangsrichtung U einfassendes zweites, äußeres Hülsenelement 18 angeordnet. Auch das Hülsenmaterial des zweiten äußeren Hülsenelements 18 kann einen Faserverbundwerkstoff, insbesondere Carbon, umfassen oder aus einem solchen bestehen. Besonders können folgende Komponenten der beiden Rotoren 5, 6 als Gleichteile ausgebildet sein: die Basisteile 10, 11, die Magnetelemente 8, 9, die inneren Hülsenelemente 23, und/oder die äußeren Hülsenelemente 17, 18. Dann können diese Komponenten wahlweise in den ersten oder zweiten Rotor 5, 6 der magnetischen Kupplung 1 verbaut werden. Dies hat erhebliche Kosteneinsparungen bei der Fertigung der magnetischen Kupplung 1 zur Folge.

Entsprechend Figur 1 ist das jeweilige stirnseitige Begrenzungsteil 4 in das erste bzw. zweite äußere Hülsenelement 17, 18 eingesetzt und schließt in axialer Richtung vom zugehörigen Rotor 5, 6 weg bündig mit dem jeweiligen Hülsenelement 17, 18 ab.

Als mechanisch besonders stabil erweist sich eine Variante, bei welcher das stirnseitige Begrenzungsteil 4 axial an dem jeweiligen Aufnahme-Kragen 15, 16 anliegt. Besonders zweckmäßig kann das stirnseitiges Begrenzungsteil 4 mit dem jeweiligen Aufnahmekragen 15, 16 und/oder dem jeweiligen Hülsenelement 17, 18 verklebt sein.

Wie in Figur 1 mittels des mit 29 bezeichneten Pfeils angedeutet, kann der erste Rotor 5 relativ zum zweiten Rotor 6 in der axialen Richtung A verstellbar ausgebildet sein. Auf diese Weise lässt sich ein Abstand a zwischen den beiden Rotoren 5, 6 verstellen. Eine solches Verstellen des Abstands a ermöglicht eine Variation der Stärke der magnetischen Kopplung zwischen den beiden Rotoren 5, 6. Mit zunehmendem Abstand a verringert sich der Kopplungsgrad, mit abnehmendem Abstand a nimmt er zu.

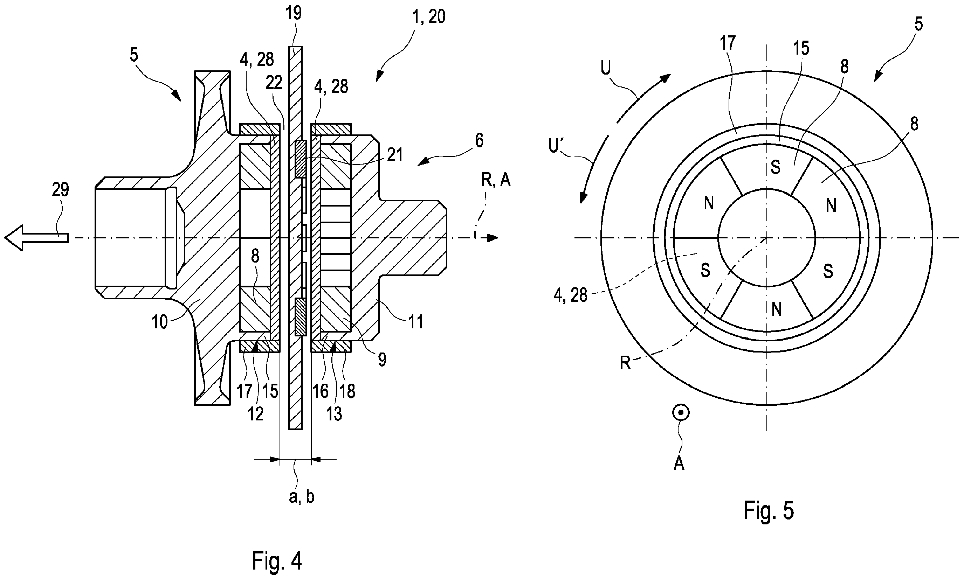

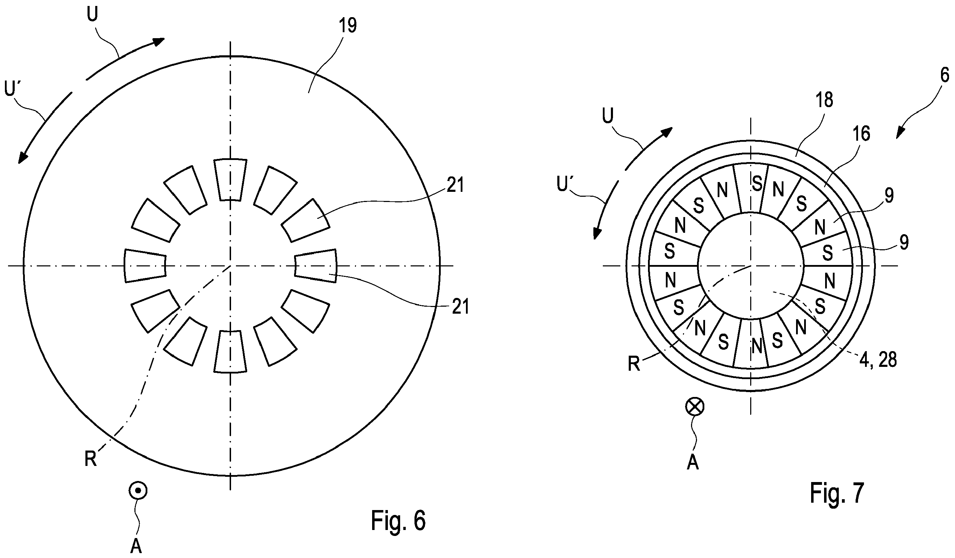

Die Figuren 4 bis 7 zeigen ein Anwendungsbeispiel, bei welchem die magnetische Kupplung 1 durch Verwendung von magnetischen Polstäben 21 als Magnetgetriebe 20 realisiert ist, welches die Drehzahl des Turbinenrads 2 ins Langsame übersetzt. Insbesondere kann das Magnetgetriebe 20 nach Art eines Reluktanzgetriebes ausgebildet sein. Hierzu ist in der axialen Richtung A in einem dort ausgebildeten Spalt 22 zwischen dem ersten und dem zweiten Rotor 5, 6 mit den beiden stirnseitigen Begrenzungsteilen 4 bzw. Begrenzungsscheiben 28 eine Trennwand 19 angeordnet, die in einer Ebene senkrecht zur Drehachse R verläuft. Die Trennwand 19 ist in Figur 6 in separater Darstellung in einer Draufsicht entlang der axialen Richtung A gezeigt. Durch den axialen Abstand a zwischen den beiden Basisteilen 10, 11 ist eine Spaltbreite b definiert, die höchstens 3mm, vorzugsweise höchstens 1 mm, beträgt, um eine gute magnetische Kopplung zwischen den ersten und zweiten Magnetelementen 8, 9 sicherzustellen.

Wie die Figuren 4 und 6 erkennen lassen, sind an der Trennwand 19 entlang der Umfangsrichtung U der Rotoren 5, 6 eine Mehrzahl von Polstäben 21 angeordnet. Die Anzahl n an Polstäben 21 beträgt im Beispiel der Figur 6 n = 12. Die Figur 5 zeigt die ersten Magnetelemente 8 des ersten Rotors 5 in einer Draufsicht entlang der axialen Richtung A. Man erkennt, dass sechs erste Magnetelemente 8 vorhanden sind, welche drei erste Polpaare ausbilden. Die Zahl der ersten Polpaare wird nachfolgend als $p_1$ bezeichnet, d.h. im Beispiel der Figur 5 beträgt $p_1$ = 3. Die Figur 7 zeigt die zweiten Magnetelemente 9 des zweiten Rotors 6 in einer Draufsicht entlang der axialen Richtung A. Man erkennt, dass achtzehn zweite Magnetelemente 9 vorhanden sind, welche neun zweite Polpaare ausbilden. Die Zahl der zweiten Polpaare wird nachfolgend mit $p_2$ bezeichnet, d.h. im Beispiel der Figur 7 beträgt $p_2$ = 9. Für die Anzahl der Polstäbe n und die Anzahl der ersten und zweiten Polpaare $p_1$, $p_2$ gilt also die Beziehung

$$n = p_1 + p_2.$$

Wenn nun der erste Rotor 5 mit den ersten Magnetelementen 8 in Umfangsrichtung U gedreht wird, werden die von ersten Magnetelementen 8 erzeugten Magnetfelder durch die Polstäbe 21 auf der feststehenden Trennwand 19 durchsetzt, mit der Folge, dass zweite Rotor 6 und dementsprechend das zweite Basisteil 11 mit den zweiten Magnetelementen 9 entgegen der Umfangsrichtung U - in den Figuren 5 bis 7 mit U' bezeichnet dreht. Dabei wird die Drehzahl des ersten Rotors 5 entsprechend dem Verhältnis $p_1$:$p_2$ ins Langsame übersetzt.

In einem in den Figuren nicht näher dargestellten, weiteren Anwendungsbeispiel kann der zweite Rotor 6 der magnetischen Kupplung 1 zur Übersetzung des ersten Rotors 5 ins Langsame oder, bei geeigneter Konfiguration, auch ins Schnelle, drehfest mit der Eingangswelle eines Getriebes, insbesondere eines Planetengetriebes, verbunden sein. Für den Fachmann eröffnet die hier vorgestellte, erfindungsgemäße magnetische Kupplung also eine Vielzahl von Anwendungsfeldern.

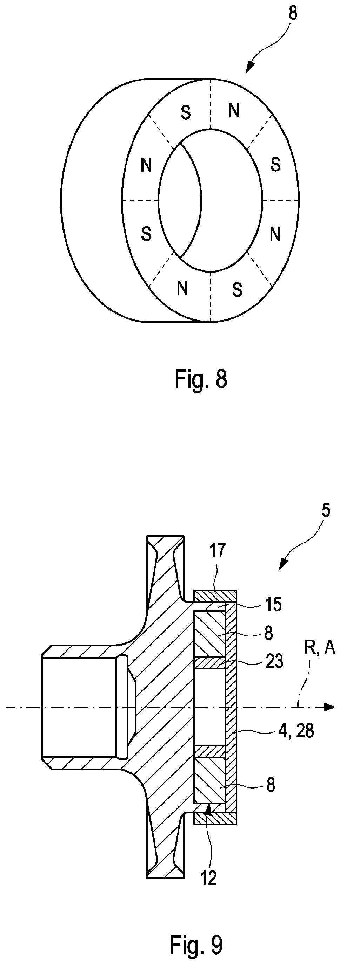

Die Figur 8 zeigt eine Variante der ersten und weiten Magnetelemente 8, 9. Im Beispiel der Figur 8 ist ein erstes Magnetelement 8 gezeigt, welches einteilig und vorzugsweise ringförmig ausgebildet ist. Dieses kann die einzelnen ersten Magnetelemente 8 der Figur 1 ersetzen, indem die entgegengesetzten axialen Polarisationsrichtungen direkt in das einstückige Magnetelement 8 integriert werden. Mit anderen Worten, in diesem Fall wird nur ein einziges erstes Magnetelement 8 im ersten Rotor 5 verbaut. Das aufwändige Aufbringen einer Mehrzahl von ersten Magnetelementen 8 kann in diesem Fall entfallen. Das Beispiel eines einzigen und einstückigen, vorzugsweise ringförmigen ersten Magnetelements 8 anstelle mehrerer erster Magnetelemente 8 kann direkt auf die zweiten Magnetelemente 9 übertragen werden, d.h. vorangehende Erläuterungen gelten mutatis mutandis für ein einziges und einstückiges, vorzugsweise ringförmiges, zweites Magnetelement 9.

Die Figur 9 zeigt eine weiterbildende Variante des ersten Rotors 5 der Figuren 1 bis 7. Beim ersten Rotor 5 der Figur 9 ist ein sich entlang der Umfangsrichtung U erstreckendes und radial innen an den ersten Magnetelementen 8 anliegendes erstes inneres Hülsenelement 23 angeordnet. Bezüglich einer radialen Richtung ist also der erste Aufnahme-Kragen 15 sandwichartig zwischen dem inneren und dem äußeren ersten Hülsenelement 17, 23 angeordnet. Auf diese Weise kann eine besonders gute Aussteifung des ersten Aufnahme-Kragens 15 erzielt werden. Auch das Hülsenmaterial des ersten inneren Hülsenelements 23 kann einen Faserverbundwerkstoff, insbesondere Carbon, umfassen.

Auch der zweite Aufnahme-Kragen 16 des zweiten Rotors 6 mit den zweiten Magnetelementen 9 kann mit einem solchen zweiten inneren Hülsenelement ausgestattet werden (in Figur 9 nicht explizit gezeigt), wobei obige Erläuterungen zum erstes inneren Hülsenelement 23 mutatis mutandis für das zweite innere Hülsenelement 23 gelten. Wie Figur 9 erkennen lässt, verschließt das als stirnseitige Begrenzungsscheibe 28 ausgebildete stirnseitige Begrenzungsteil 4 die erste Aufnahme 12 deckelartig und liegt dabei axial nicht nur am einstückigen Magnetelement 8, sondern auch am inneren Hülsenelement 23 an. Das stirnseitige Begrenzungsteil 4 kann mit dem ersten Aufnahme-Kragen 15 und/oder dem Magnetelement 8 und/oder dem inneren Hülsenelement 23 verklebt sein.

In einer bevorzugten Variante des Beispiels können der erste Rotor 5 und der zweite Rotor 6 als Gleichteile ausgebildet sein. Das jeweilige Gleichteil kann dann mittels eines Befestigungsbolzens oder mittels einer Schraubverbindung oder mittels Einpressens oder mittels des äußeren Hülsenelements 17, 18 lösbar am Turbinenrad 2 befestigt sein.

**Patentansprüche**

1.  Magnetische Kupplung (1), insbesondere für eine Abwärmenutzungseinrichtung,

    - mit einem ersten Rotor (5) und einem zweiten Rotor (6), welche um eine Drehachse (D) drehverstellbar sind, wobei der erste Rotor (5) magnetisch mit dem zweiten Rotor (6) gekoppelt ist,
    - wobei an wenigstens einem der beiden Rotoren (5, 6) an einer dem jeweils anderen Rotor (6, 5) zugewandten axialen Stirnseite (7, 14) ein stirnseitiges Begrenzungsteil (4) aus einem elektrisch leitenden Material zum Reduzieren einer Drehzahl-Differenz zwischen den beiden Rotoren (5, 6) angeordnet ist.

2.  Magnetische Kupplung nach Anspruch 1,
    **dadurch gekennzeichnet, dass**
    das stirnseitige Begrenzungsteil (4) als, insbesondere zylindrische, stirnseitigen Begrenzungsscheibe (28) ausgebildet ist.

3.  Magnetische Kupplung nach Anspruch 1 oder 2,
    **dadurch gekennzeichnet, dass**
    sowohl am ersten Rotor (5) als auch am zweiten Rotor (6) jeweils ein stirnseitiges Begrenzungsteil (4) angeordnet ist.

4.  Magnetische Kupplung nach einem der Ansprüche 1 bis 3,
    **dadurch gekennzeichnet, dass**
    das Material des stirnseitigen Begrenzungsteils (4) keine ferromagnetischen Eigenschaften besitzt.

5.  Magnetische Kupplung nach einem der vorhergehenden Ansprüche,
    **dadurch gekennzeichnet, dass**
    das Material des stirnseitigen Begrenzungsteils (4) Kupfer umfasst, oder dass das stirnseitige Begrenzungsteil (4) aus Kupfer besteht.

6.  Magnetische Kupplung nach einem der vorhergehenden Ansprüche,
    **dadurch gekennzeichnet, dass**
    der erste Rotor (5) wenigstens einen erstes Magnetelement (8) und der zweite Rotor (6) wenigstens ein zweites Magnetelement (9) aufweisen, die an einander zugewandten axialen Stirnseiten (7, 14) der beiden Rotoren (5, 6) angeordnet sind.

7.  Magnetische Kupplung nach Anspruch 6 ,
    **dadurch gekennzeichnet, dass**

    - der erste Rotor (5) ein erstes Basisteil (10) aufweist, an welchem an der dem zweiten Rotor (6) zugewandten Stirnseite (7) eine erste Aufnahme (12) vorhanden ist, in welcher das wenigstens eine erste Magnetelement (8) aufgenommen ist, und/oder dass
    - der zweite Rotor (6) ein zweites Basisteil (11) aufweist, an welchem an einer dem ersten Rotor (5) zugewandten Stirnseite (14) eine zweite Aufnahme (13) vorhanden ist, in welcher das wenigstens eine zweite Magnetelement (9) aufgenommen ist.

8.  Magnetische Kupplung nach Anspruch 7,
    **dadurch gekennzeichnet, dass**
    das stirnseitiges Begrenzungsteil (4), insbesondere die stirnseitigen Begrenzungsscheibe (28), die erste bzw. zweite Aufnahme (12, 13), vorzugsweise deckelartig, verschließt.

9.  Magnetische Kupplung nach einem der vorhergehenden Ansprüche 6,
    **dadurch gekennzeichnet, dass**
    sich das Begrenzungsteil (4) im Wesentlichen über die Stirnseite (7, 14) des Rotors (5, 6) hinweg erstreckt.

10.  Magnetische Kupplung nach einem der Ansprüche 6 bis 9,
    **dadurch gekennzeichnet, dass**
    das wenigstens eine erste Magnetelement (8) und/oder das wenigstens eine zweite Magnetelement (9) als Permanentmagnet ausgebildet ist, welcher eine magnetische Polarisationsrichtung entlang einer durch die Drehachse (D) definierten axialen Richtung (A) aufweist.

11.  Magnetische Kupplung nach einem der Ansprüche 7 bis 10,
    **dadurch gekennzeichnet, dass**

    - die erste Aufnahme (12) als ein axial vom ersten Basisteil (10) zum zweiten Rotor (6) hin abstehender erster Aufnahme-Kragen (15) ausgebildet ist, in welchen das wenigstens eine erste Magnetelement (8) eingesetzt ist,
    - die zweite Aufnahme (13) als ein axial vom zweiten Basisteil (11) zum ersten Rotor (5) hin abstehender zweiter Aufnahme-Kragen (16) ausgebildet ist, in welchen das wenigstens eine zweite Magnetelement (9) eingesetzt ist.

12.  Magnetische Kupplung nach Anspruch 11,
    **dadurch gekennzeichnet, dass**

    - auf dem ersten Aufnahme-Kragen (15) radial außen ein den ersten Aufnahme-Kragen (15) entlang der Umfangsrichtung (U) einfassendes erstes äußeres Hülsenelement (17) angeordnet ist, dessen Hülsenmaterial einen Faserverbundwerkstoff, insbesondere Carbon, umfasst,
    - auf dem zweiten Aufnahme-Kragen (16) radial außen ein den zweiten Aufnahme-Kragen (16) entlang der Umfangsrichtung (U) einfassendes zweites äußeres Hülsenelement (18) angeordnet ist, dessen Hülsenmaterial einen Faserverbundwerkstoff, insbesondere Carbon, umfasst.

13. Magnetische Kupplung nach Anspruch 12,
**dadurch gekennzeichnet, dass**
das stirnseitige Begrenzungsteil (4) in das erste bzw. zweite Hülsenelement (17, 18) eingesetzt ist und in der axialen Richtung (A) vom Rotor (5, 6) weg bündig mit dem jeweiligen Hülsenelement (17, 18) abschließt.

14. Magnetische Kupplung nach Anspruch 12 oder 13,
**dadurch gekennzeichnet, dass**
das stirnseitige Begrenzungsteil (4) axial an dem jeweiligen AufnahmeKragen (15, 16) anliegt.

15. Magnetische Kupplung nach einem der Ansprüche 12 bis 14,
**dadurch gekennzeichnet, dass**
das stirnseitige Begrenzungsteil (4) mit dem jeweiligen Aufnahmekragen (15, 16) und/oder dem jeweiligen Hülsenelement (17, 18) verklebt ist.

16. Magnetische Kupplung nach einem der vorhergehenden Ansprüche,
**dadurch gekennzeichnet, dass**
der erste Rotor (5) relativ zum zweiten Rotor (6) entlang der axialen Richtung (A) verstellbar ausgebildet ist oder umgekehrt.

Fig. 1

Fig. 2

Fig. 3

Fig. 4

Fig. 5

EP 3 174 184 A1

Fig. 7

Fig. 6

8

Fig. 8

5

17
15
8
23
R, A
4, 28
8
12

Fig. 9

Fig. 1

Europäisches
Patentamt

European
Patent Office

Office européen
des brevets

# EUROPÄISCHER RECHERCHENBERICHT

Nummer der Anmeldung

EP 16 19 9154

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H09 74777 A (NIPPON SOKEN) 18. März 1997 (1997-03-18) * Abbildung 3 * ----- | 1-4,6,9, 10,16 | INV. H02K49/00 H02K49/10 H02K49/04 |
| X | US 3 085 407 A (TOMLINSON KENNETH J) 16. April 1963 (1963-04-16) * Abbildung 1 * ----- | 1,2,4-6, 9,10,16 | |
| X | US 2013/094981 A1 (LIANG JIA-YUAN [TW] ET AL) 18. April 2013 (2013-04-18) * Abbildung 4 * ----- | 1,2,4,5, 7,16 | |
| X | JP S56 132159 A (MITSUBISHI STEEL MFG) 16. Oktober 1981 (1981-10-16) * Abbildung 3 * ----- | 1,2,4,6, 10,16 | |
| X | DE 21 57 681 A1 (NAGEL WILHELM FRIEDRICH; RIEMENSCHNEIDER FRITZ) 24. Mai 1973 (1973-05-24) * Abbildung 3 * ----- | 1,7-16 | |
| A | EP 2 061 142 A2 (BARUFFALDI SPA [IT]) 20. Mai 2009 (2009-05-20) * Abbildungen 1,5 * ----- | 1-16 | RECHERCHIERTE SACHGEBIETE (IPC) H02K |

Der vorliegende Recherchenbericht wurde für alle Patentansprüche erstellt

| Recherchenort | Abschlußdatum der Recherche | Prüfer |
|---|---|---|
| Den Haag | 4. April 2017 | Fernandez, Victor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**EP 3 174 184 A1**

**ANHANG ZUM EUROPÄISCHEN RECHERCHENBERICHT
ÜBER DIE EUROPÄISCHE PATENTANMELDUNG NR.**

EP 16 19 9154

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2017

| Im Recherchenbericht angeführtes Patentdokument | | Datum der Veröffentlichung | Mitglied(er) der Patentfamilie | | Datum der Veröffentlichung |
|---|---|---|---|---|---|
| JP H0974777 | A | 18-03-1997 | KEINE | | |
| US 3085407 | A | 16-04-1963 | KEINE | | |
| US 2013094981 | A1 | 18-04-2013 | TW 201317469 A<br>US 2013094981 A1 | | 01-05-2013<br>18-04-2013 |
| JP S56132159 | A | 16-10-1981 | KEINE | | |
| DE 2157681 | A1 | 24-05-1973 | KEINE | | |
| EP 2061142 | A2 | 20-05-2009 | KEINE | | |

EPO FORM P0461

Für nähere Einzelheiten zu diesem Anhang : siehe Amtsblatt des Europäischen Patentamts, Nr.12/82

15